# EUROPEAN PATENT APPLICATION

(11) **EP 4 156 336 A2**
(43) Date of publication of application: **29.03.2023**
(21) Application number: 22190662.1
(22) Date of filing: 16.08.2022
(51) Int. Cl.: H01M 4/38, H01M 10/0562, H01M 50/446, H01M 50/46, H01M 50/497

(54) **COMPOSITE FOAM AS SOLID-ELECTROLYTE INTERFACE FOR SOLID-STATE BATTERIES**

(30) Priority: 02.09.2021 US 202163240254 P; 17.11.2021 US 202117528392
(71) Applicant: Palo Alto Research Center Incorporated, Webster, NY 14580 (US)
(72) Inventor: BUCCI, Giovanna, Santa Clara, 95054 (US)
(74) Representative: Gill Jennings & Every LLP

(57) **Abstract**

A composition of matter, has a solid foam, at least one ionic conductor in the foam, and an electronic conductor in the foam. A battery has an anode, comprising a metal electrode and a solid foam, a cathode, and a solid electrolyte between the anode and the cathode, the solid electrolyte in contact with the solid foam. A solid foam has an electronic conductor, a hard ionic conductor, and a soft ionic conductor.

## Description

### RELATED APPLICATIONS

This application claims priority to and the benefit of US Provisional Application No. 63/240,254 filed September 2, 2021, which is incorporated herein by reference in its entirety.

### TECHNICAL FIELD

This disclosure relates to electrolytes used in batteries, more particularly to solid electrolytes.

### BACKGROUND

Inorganic solid electrolytes, paired with Li-metal anodes, could result in high energy density batteries that can be safely recharged. The attempts in using lithium as a negative electrode in Li-ion have revived in recent years. The energy density of graphite-based cells is reaching its limits, and the demand for high-energy applications only continues to grow.

However, electrodeposition of lithium can form non-uniform, tree-like structures called dendrites. The dendrites will eventually grow to the point of penetrating the solid-electrolyte layer, reaching the cathode and shorting out the cell. To enable Li-metal anodes, the solid separator must have sufficient mechanical robustness to occlude the path for Li-dendrites growth and prevent cell shorting.

### SUMMARY

According to aspects illustrated here, there is provided a composition of matter, has a solid foam, at least one ionic conductor in the foam, and an electronic conductor in the foam.

According to aspects illustrated here, there is provided a battery have an anode, comprising a metal electrode and a solid foam, a cathode, and a solid electrolyte between the anode and the cathode, the solid electrolyte in contact with the solid foam.

According to aspects illustrated here there is provided a solid foam having an electronic conductor, a hard ionic conductor, and a soft ionic conductor.

### BRIEF DESCRIPTION OF THE DRAWINGS

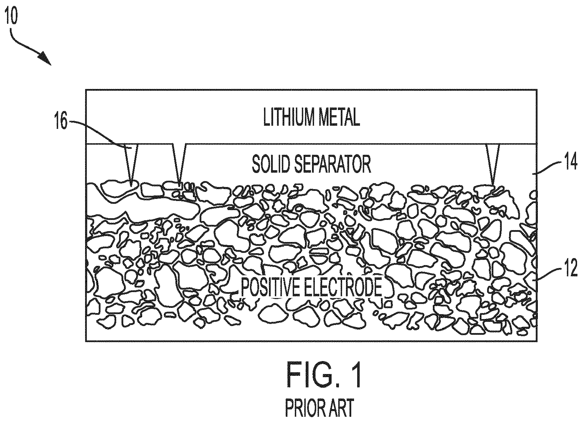

FIG. 1 shows an embodiment of a portion of a battery having dendrites.
FIG. 2 shows different embodiments of a battery having a solid foam electrolyte.
FIG. 3 shows an embodiment of a solid foam electrolyte.

### DETAILED DESCRIPTION OF THE EMBODIMENTS

In current state-of-the-art batteries such as 10, the solid electrolyte 14 separates the negative electrode from the positive electrode 12. Dendrites, such as 16 can form from uneven deposition of lithium. In extreme cases, the dendrites will pierce the separator and cause the cells to short out.

The embodiments here involve an artificial solid-electrolyte interface (SEI) made of a composite foam to self-regulate the local current density while maintaining mechanical stability. The composite conductive foam combines the toughness and manufacturability of a polymer electrolyte and the approximate room-temperature conductivity of a ceramic electrolyte to achieve stable cycling. This approach greatly expands the surface area of the charge-transfer interface, provides a conductive scaffold that maintains lithium accessibility during discharge. The conductive foam confines the deposition front, preventing the lithium dendrites from puncturing the solid electrolyte and shorting the cell. Local hydrostatic pressure within the cell self-regulates the local current. This avoids mechanical degradation.

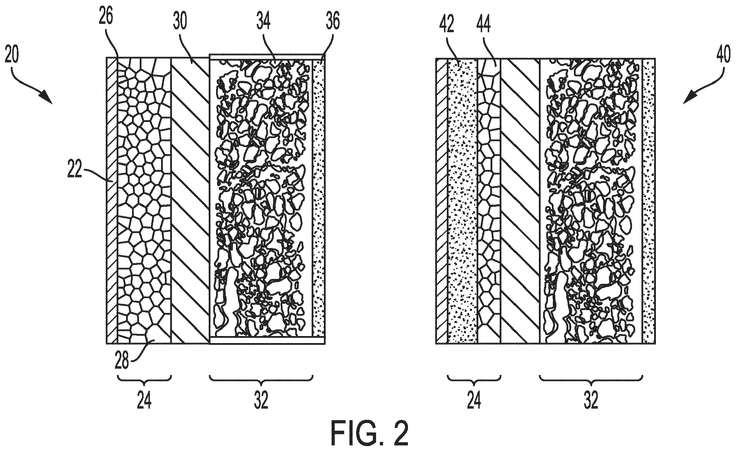

FIG. 2 shows alternative embodiments of a battery using a solid foam. The battery 20 has a current collector 22 and a negative electrode, also referred to as an anode, 24. In the battery 20, the anode 24 comprises the negative, metal electrode 26 and the solid foam 28. The term "anode" will be used to refer to the combination of metal electrode 26 and the solid foam, even though the solid electrolyte 30 separates the positive electrode 32, or cathode, from the negative electrode. The solid electrolyte will typically comprise a lithium ion (Li-ion) conducting material and may comprise a hard material such as ceramic, or a softe material, such as a polymer. The solid electrolyte and the foam will contact each other and the interface may be a coherent or partially coherent interface. In one embodment they could be fabricated together and made of the same material. A coherent interface forms when complete continuity of atoms and planes exists across the interface. The positive electrode 34 has a collector 36.

In the embodiment of battery 40, the negative electrode also comprises metal 42 and foam 44, but the foam 44 could exist as a thin layer between the negative electrode metal and the solid electrolyte. In either case, the foam can cover the entire negative-electrode thickness. This increased surface area allows for good lithium accessibility. Local hydrostatic pressure within the cell self-regulates the local current, thereby avoiding mechanical degradation.

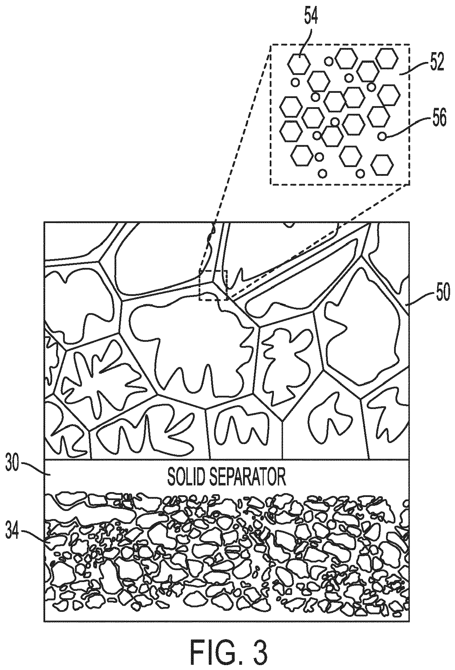

FIG. 3 shows a more detailed view of a portion of a battery in accordance with the embodiments. The cathode 34 and the separator 30 are shown with a solid electrolyte interface (SEI) layer 50. The expanded view of the SEI layer in this embodiment has a polymer ionic conductor 52, a ceramic ionic conductor 54, and an electronic conductor 56. In one embodiment, the two ionic conductors take the form of a "hard" conductor and a "soft" conductor, not restricted to particular materials, where a hard material has a hardness of equal to or more than 1 GigaPascal, and the soft material has a hardness of less than 1 GigaPascal. Alternately, the threshold between "soft" and "hard" could be at 1 MPa, 10 MPa, 50 MPa, 100 MPa, 200 MPa, 300 MPa, 400 MPa, 500 MPa, or 750 MPa. Ionic conductivity as used here means conduction due to the motion of ionic charge. Electronic conductivity results from movement of electrically charged particles through a transmission medium.

One embodiment comprises a composition of matter. The composition includes at least one ionic conductor, and an electronic conductor in a foam, meaning that the foam comprises the ionic conductor and the electronic conductor The composition may have a hard ionic conductive material and a soft ionic material. The hard ionic conductive material may comprise a ceramic lithium-ion conductor. The soft ionic conductive material may comprise a polymer lithium-ion conductor. The electronic conductor may comprise a material such as carbon black, including any of its subtypes, and/or KetJen black, a highly conductive form of carbon black.. As used here, the terms "hard" and "soft" mean that their modulus is either above or below 1 Giga Pascal (GPa). The term "foam" as used here means a solid foam comprising of a framework of solid cellular material surrounding gas-filled voids.

In one embodiment of the composition, the hard material comprises a garnet-based superionic conductor, such as LLZO (cubic garnet), lithium germanium phosphorus sulfur (LGPS), LiM₂(PO₄)₃, where M = Zr, Hf, Sn, Ti, Al, Sc, In, Ge, Nb, Y, La, Fe, Cr, Zn, Ca, and Ge, or a combination of metals with stoichiometry adjusted based on valence, LiSCION; (lithium ionic superconductor), and Ohara glass. The hard material may have high room temperature conductivity of greater than 10⁻³ S/cm, and high stiffness. Alternately, the hard material may have room temperature conductivity above 10⁻⁶ S/cm, above 10⁻⁵ S/cm, above 10⁻⁴ S/cm, above 10⁻² S/cm, or above 10⁻¹ S/cm.

In one embodiment of the composition, the soft material comprises a polymer electrolyte such as a lithium salt dissolved in a polymer or a single-ion conducting polymer in which lithium ions coordinate to anions in the polymer structure. Examples of ion-dissolving polymers are polyethers, polyethylene oxide, polycarbonates, polythiols and their derivatives. Examples of lithium salts are lithium triflate, lithium tetrafluoroborate, lithium carbonate, lithium nitrate, lithium hexafluorophosphate, lithium bis(trifluoromethane sulfonyl imide) (LiTFSI), lithium bis(trifluoro sulfonyl imide) (LiFSI), lithium bis(oxalate borate), and lithium difluoro(oxalate) borate, or other materials consisting of Li ion and anion.

The soft material would have high toughness and manufacturability. The soft material may have room temperature conductivity above 10⁻⁶ S/cm, above 10⁻⁵ S/cm, above 10⁻⁴ S/cm, above 10⁻³ S/cm, above 10⁻² S/cm, or above 10⁻¹ S/cm. The soft material could be thermosetting, thermoplastic, or solvent processed. The soft material could include some content of conventional liquid electrolyte solvent such as organic carbonates, ethylene carbonate, propylene carbonate, dimethyl carbonate, diethyl carbonate, polyethylene glycol, or organic lactones. The polymer could include reactive groups that crosslink to form a gel during the manufacturing process. In some embodiments, the electronic conductor comprises a carbon-containing material. The composition of the foam-forming material, the composite of electronic conductor and hard and soft ionic conductors, could additionally include a binder, solvent, or plasticizer to change the manufacturability or viscosity of the foam-forming mixture.

One embodiment comprises a battery having a cathode, anode, and an electrolyte, where the anode comprises a foam electrolyte with an ionic conductor, and an electronic conductor functioning as a scaffold for the (metal) anode. One embodiment comprises a solid state battery and the solid electrolyte interphase (SEI) comprises the foam electrolyte.

All features disclosed in the specification, including the claims, abstract, and drawings, and all the steps in any method or process disclosed, may be combined in any combination, except combinations where at least some of such features and/or steps are mutually exclusive. Each feature disclosed in the specification, including the claims, abstract, and drawings, can be replaced by alternative features serving the same, equivalent, or similar purpose, unless expressly stated otherwise.

It will be appreciated that variants of the above-disclosed and other features and functions, or alternatives thereof, may be combined into many other different systems or applications. Various presently unforeseen or unanticipated alternatives, modifications, variations, or improvements therein may be subsequently made by those skilled in the art which are also intended to be encompassed by the following claims.

## Claims

1. A composition of matter, comprising:
a solid foam;
at least one ionic conductor in the foam; and
an electronic conductor in the foam.

2. The composition of matter as claimed in claim 1, wherein the at least one ionic conductor comprises two ionic conductors, a hard ionic conductor and a soft ionic conductor.

3. The composition of matter as claimed in claim 2, wherein the soft ionic conductor may include one or more of the group consisting of: organic carbonates, ethylene carbonate, propylene carbonate, dimethyl carbonate, diethyl carbonate, polyethylene glycol, and organic lactones.

4. The composition of matter as claimed in claim 2, wherein the hard ionic conductor comprises a ceramic lithium-ion conductor, or wherein the soft ionic conductor comprises a polymer lithium-ion conductor, or wherein the hard ionic conductor comprises a ceramic lithium-ion conductor and the soft ionic conductor comprises a polymer lithium-ion conductor.

5. The composition of matter as claimed in claim 4, wherein the soft ionic conductor comprises an ion-dissolving polymer selected from the group consisting of: polyethers, polyethylene oxide, polycarbonates, polythiols and derivatives thereof.

6. The composition of matter as claimed in claim 4, wherein the soft ionic conductor comprises a lithium salt dissolved in a polymer, wherein the lithium salt is at least one selected from the group consisting of: lithium triflate, lithium tetrafluoroborate, lithium carbonate, lithium nitrate, lithium hexafluorophosphate, lithium bis(trifluoromethane sulfonyl imide) (LiTFSI), lithium bis(trifluoro sulfonyl imide) (LiFSI), lithium bis(oxalate borate), and lithium difluoro(oxalate) borate.

7. The composition of matter as claimed in any preceding claim, wherein the hard ionic conductor comprises one of the group consisting of: a garnet-based superionic conductor, LLZO, lithium germanium phosphorus sulfur, LiM₂(PO₄)₃, where M = Zr, Hf, Sn, Ti, Al, Sc, In, Ge, Nb, Y, La, Fe, Cr, Zn, Ca, and Ge, or a combination of metals with stoichiometry adjusted based on valence, lithium ionic superconductor, and Ohara glass.

8. The composition of matter as claimed in any preceding claim, wherein the hard ionic conductor has a room temperature conductivity above 10⁻⁶ S/cm.

9. The composition of matter as claimed in any preceding claim, further comprising at least one of a binder, a solvent, and a plasticizer.

10. A battery, comprising:
an anode, comprising a metal electrode and a solid foam, optionally wherein the solid foam covers an entire surface of the metal electrode;
a cathode; and
a solid electrolyte between the anode and the cathode, the solid electrolyte in contact with the solid foam.

11. The battery as claimed in claim 10, wherein the solid electrolyte and the foam are in contact in at least a partially coherent interface.

12. The battery as claimed in claim 10, wherein the solid electrolye and the foam is at least one of fabricated together, or made of the same material.

13. The battery as claimed in any of claims 10 to 12, wherein the solid foam comprises:
an electronic conductor,
a soft ionic conductor, optionally wherein the soft ionic conductor comprises a polymer lithium-ion conductor, and
a hard ionic conductor, optionally wherein the hard ionic conductor comprises a ceramic lithium-ion conductor.

14. A solid foam, comprising:
an electronic conductor;
a hard ionic conductor, optionally wherein the hard ionic conductor comprises a ceramic lithium-ion conductor; and
a soft ionic conductor, optionally wherein the soft ionic conductor comprises a polymer lithium-ion conductor.

15. The solid foam as claimed in claim 14, wherein the hard ionic conductor has a hardness of more than or equal to 1 GigaPascal and/or wherein the soft ionic conductor has a hardness of less than or equal to 1 GigaPascal.
